# EUROPEAN PATENT APPLICATION

(11) **EP 4 772 951 A1**
(43) Date of publication of application: **08.07.2026**
(21) Application number: 24884482.1
(22) Date of filing: 21.10.2024
(51) Int. Cl.: G05D 1/00

(54) **INTELLIGENT LOCOMOTION DEVICE CONTROL METHOD BASED ON CHARGING PILE AND RELATED DEVICE**

(30) Priority: 03.11.2023 CN 202311465455
(71) Applicant: Shenzhen Mammotion Innovation Co., Limited, Shenzhen, Guangdong 518000 (CN)
(72) Inventor: WEI, Jidong, Shenzhen, Guangdong 518000 (CN); WANG, Kai, Shenzhen, Guangdong 518000 (CN); WANG, Ning, Shenzhen, Guangdong 518000 (CN); HUA, Jinfeng, Shenzhen, Guangdong 518000 (CN)
(74) Representative: Huang, Liwei
(86) International application number: PCT/CN2024/126079
(87) International publication number: WO 2025/092478

(57) **Abstract**

An embodiment of this disclosure discloses a control method for an intelligent mobile device based on a charging station and related equipment, applied to the intelligent mobile device. The method comprises: receiving a return instruction, the return instruction being configured to control the intelligent mobile device to navigate to a target charging station; in response to the return instruction, acquiring a target position image of the target charging station during a process of the intelligent mobile device navigating to the target charging station; performing feature matching between the target position image and a pre-stored historical position image of the target charging station to obtain a matching result; detecting, based on the matching result, whether the target charging station has been moved; and in response to detecting that the target charging station has been moved, updating a position of the target charging station on a map to obtain a first position. By employing the embodiments of this disclosure, movement of a charging station can be detected indoors or in places with poor RTK signals, thereby ensuring accuracy and efficiency in returning to the station.

## Description

The present application claims priority to Chinese Patent Application No. 202311465455.6, filed on November 3, 2023,and entitled " INTELLIGENT MOBILE DEVICE CONTROL METHOD BASED ON CHARGING STATION AND RELATED APPARATUS", filed with the China National Intellectual Property Administration on, the entire contents of which are hereby incorporated by reference in their entireties.

### TECHNICAL FIELD

The present disclosure relates to the field of communication technologies or the field of image processing technologies, and more particularly, to an intelligent mobile device control method based on charging station and related apparatus.

### BACKGROUND

At present, intelligent mobile devices (such as lawn mowers) use real-time kinematic (RTK) positioning for autonomous navigation. Usually, the charging station is set at a position on the lawn where RTK signals are strong, so as to facilitate the intelligent mobile device returning to the charge station for recharging.

In practical applications, the charging station cannot be placed indoors or in places with poor RTK signals, such as garages, because high accuracy in returning for charging cannot be guaranteed in these places. Therefore, there is an urgent need to solve the problem of how to ensure accurate and efficient return to the station indoors or in places with poor RTK signals.

### SUMMARY

Embodiments of this disclosure provide a control method for an intelligent mobile device based on a charging station and related equipment, which can ensure accurate and efficient return to the station indoors or in places with poor RTK signals by detecting movement of the charging station.

In a first aspect, an embodiment of this disclosure provides an intelligent mobile device control method based on charging station, applied to the intelligent mobile device, the method comprising: receiving a return instruction, the return instruction being configured to control the intelligent mobile device to navigate to a target charging station;
in response to the return instruction, acquiring a target position image of the target charging station during a process of the intelligent mobile device navigating to the target charging station;
performing feature matching between the target position image and a pre-stored historical position image of the target charging station to obtain a matching result;
detecting, based on the matching result, whether the target charging station has been moved; and
in response to detecting that the target charging station has been moved, updating a position of the target charging station on a map to obtain a first position.

In a second aspect, A control apparatus for an intelligent mobile device based on a charging station, applied to the intelligent mobile device, the apparatus comprising: a receiving unit, an acquisition unit, a matching unit, a detection unit, and an updating unit, wherein:
the receiving unit is configured to receive a return instruction, the return instruction being configured to control the intelligent mobile device to navigate to a target charging station;
the acquisition unit is configured to, in response to the return instruction and during a process of the intelligent mobile device navigating to the target charging station, acquire a target position image of the target charging station;
the matching unit is configured to perform feature matching between the target position image and a pre-stored historical position image of the target charging station to obtain a matching result;
the detection unit is configured to detect, based on the matching result, whether the target charging station has been moved; and
the updating unit is configured to update a position of the target charging station on a map to obtain a first position in response to detecting that the target charging station has been moved.

In a third aspect, an embodiment of this disclosure provides an intelligent mobile device, comprising a processor and a memory, the memory being configured to store one or more programs, and the memory being configured to be executed by the processor, the one or more programs comprising instructions configured to perform steps in the first aspect of the embodiments of this disclosure.

In a fourth aspect, an embodiment of this disclosure provides a computer-readable storage medium, wherein the computer-readable storage medium stores a computer program for electronic data exchange, and the computer program causes a computer to perform some or all of the steps described in the first aspect of the embodiments of this disclosure.

In a fifth aspect, an embodiment of this disclosure provides a computer program product, wherein the computer program product comprises a non-transitory computer-readable storage medium storing a computer program, the computer program being operable to cause a computer to perform some or all of the steps described in the first aspect of the embodiments of this disclosure. The computer program product may be a software installation package.

Implementing embodiments of this disclosure provides the following beneficial effects: The control method for an intelligent mobile device based on a charging station and related equipment described in this disclosure, applied to the intelligent mobile device, receiving a return instruction, the return instruction being configured to control the intelligent mobile device to navigate to a target charging station; in response to the return instruction, acquiring a target position image of the target charging station during a process of the intelligent mobile device navigating to the target charging station; performing feature matching between the target position image and a pre-stored historical position image of the target charging station to obtain a matching result; detecting, based on the matching result, whether the target charging station has been moved; and in response to detecting that the target charging station has been moved, updating a position of the target charging station on a map to obtain a first position. Thereby, efficient return of the intelligent mobile device for charging in an environment with weak RTK signals and recognition of whether the position of the charging station has changed can be realized, improving efficiency of the next return for charging. Moreover, during the current process of returning to the station, if the charging station is moved, the position of the charging station is updated in time, which also ensures accurate return to the station this time. Furthermore, the problem of ensuring accurate and efficient return to the station indoors or in places with poor RTK signals can be solved by detecting movement of the charging station.

### BRIEF DESCRIPTION OF THE DRAWINGS

To describe technical solutions in the embodiments of this disclosure or existing art more clearly, the drawings required for describing the embodiments or existing art will be briefly introduced below. Apparently, the drawings described below are some embodiments of this disclosure. For those of ordinary skill in the art, other drawings can also be obtained based on these drawings without creative labor.
FIG. 1 is a schematic flowchart of a control method for an intelligent mobile device based on a charging station according to an embodiment of this disclosure;
FIG. 2 is a schematic flowchart of another control method for an intelligent mobile device based on a charging station according to an embodiment of this disclosure;
FIG. 3 is a structural schematic diagram of an intelligent mobile device according to an embodiment of this disclosure;
FIG. 4 is a functional unit block diagram of a control apparatus for an intelligent mobile device based on a charging station according to an embodiment of this disclosure.

### DETAILED DESCRIPTION OF EMBODIMENTS

To enable those skilled in the art to better understand solutions of this disclosure, technical solutions in embodiments of this disclosure will be described clearly and completely below with reference to the drawings in the embodiments of this disclosure. Obviously, the described embodiments are only a part of the embodiments of this disclosure, rather than all the embodiments. Based on the embodiments in this disclosure, all other embodiments obtained by those of ordinary skill in the art without creative labor shall fall within the protection scope of this disclosure.

Terms such as "first" and "second" in the specification, claims, and the drawings of this disclosure are used to distinguish different objects, rather than to describe a specific order. In addition, terms such as "comprising" and "having" and any variations thereof are intended to cover non-exclusive inclusion. For example, a process, method, system, product, or device comprising a series of steps or units is not limited to the listed steps or units, but optionally further comprises steps or units not listed, or optionally further comprises other steps or units inherent to these processes, methods, products, or devices.

Reference to an "embodiment" herein means that a specific feature, structure, or characteristic described in connection with the embodiment can be included in at least one embodiment of this disclosure. The appearance of this phrase in various places in the specification does not necessarily all refer to the same embodiment, nor is it an independent or alternative embodiment mutually exclusive with other embodiments. It is explicitly and implicitly understood by those skilled in the art that the embodiments described herein can be combined with other embodiments.

Electronic devices described in the embodiments of this disclosure can include smartphones (such as Android phones, iOS phones, Windows Phone phones, etc.), tablets, palmtop computers, driving recorders, servers, laptops, mobile internet devices (MID), or wearable devices (such as smartwatches, Bluetooth headsets), etc. The above are only examples, rather than an exhaustive list. Including but not limited to the above electronic devices, the electronic device can also be a server, which can be an outsourcing server, a cloud server, an edge server, an intelligent robot, and so on, which is not limited herein. An intelligent robot can include any robot. For example, an intelligent robot can include a lawn mower, which can also be referred to as a lawn mowing robot.

In the embodiments of this disclosure, an intelligent mobile device can be understood as a device having a walking function. The intelligent mobile device can include at least one of: a lawn mowing robot, an intelligent vehicle, a sweeping robot, an intelligent service robot, an intelligent toy tank, an intelligent crawler, an intelligent robot dog, and so on, which is not limited herein.

The embodiments of this disclosure are described in detail below.

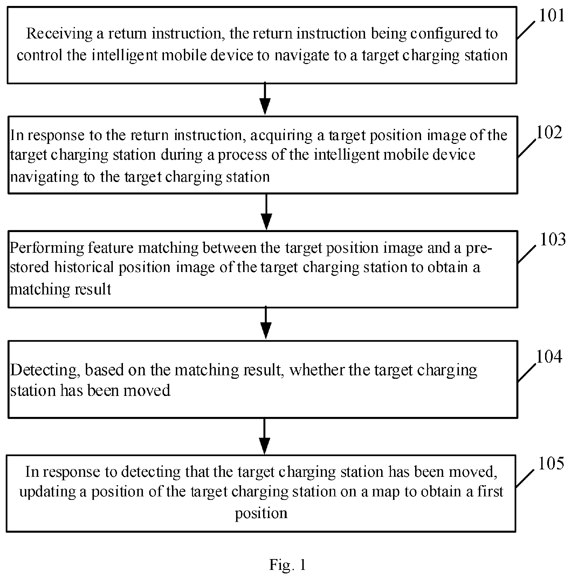

Please refer to FIG. 1, which is a schematic flowchart of a control method for an intelligent mobile device based on a charging station according to an embodiment of this disclosure, applied to the intelligent mobile device. As shown in the figure, the control method for an intelligent mobile device based on a charging station comprises:
101. Receiving a return instruction, the return instruction being configured to control the intelligent mobile device to navigate to a target charging station.

In an embodiment of this disclosure, an electronic device can send the return instruction to the intelligent mobile device, the return instruction being configured to control the intelligent mobile device to navigate to the target charging station. When the intelligent mobile device completes returning to the station, it can then perform charging through the target charging station.

Wherein, the target charging station can be pre-set or set by the system by default, that is, the target charging station can be pre-designated.

In specific implementation, based on previous experience of returning to the charging station, the position of the target charging station can be pre-marked on a map. Furthermore, based on the current position of the intelligent mobile device and the pre-marked position of the target charging station, a corresponding navigation route can be generated, and the intelligent mobile device can be controlled to move along the navigation route.

102. In response to the return instruction, acquiring a target position image of the target charging station during a process of the intelligent mobile device navigating to the target charging station.

In some embodiments of this disclosure, in response to the return instruction, the target position image of the target charging station can be acquired through a vision device during the process of the intelligent mobile device navigating to the target charging station. Furthermore, whether the target charging station has been moved can be detected based on the target position image, so that a navigation route can be planned in time, ensuring accuracy and efficiency in returning to the station.

In some embodiments of this disclosure, the vision device can include at least one of the follows:
a camera, a radar, an ultrasonic sensor, and so on, which is not limited herein.

103. Performing feature matching between the target position image and a pre-stored historical position image of the target charging station to obtain a matching result.

In an embodiment of this disclosure, the historical position image can be pre-stored in the intelligent mobile device. The historical position image can be one or more images. The target position image can be understood as a captured image, or can also be understood as feature information after the captured image is processed. The feature information can include at least one of: a feature value, a feature vector, a feature point, a feature texture, and so on, which is not limited herein.

Wherein, features of the target position image can include at least one of the follows: feature points, feature textures, feature values, feature vectors, and so on, which is not limited herein. Features of the historical position image can also include at least one of the follows : feature points, feature textures, feature values, feature vectors, and so on, which is not limited herein.

In specific implementation, feature matching can be performed between the target position image and the pre-stored historical position image of the target charging station to obtain a matching result. The matching result can be a matching value. For example, a matching value obtained by comparing feature points corresponding to the target position image and feature points corresponding to the historical position image.

In an embodiment of this disclosure, when performing feature points matching with internally stored historical image information, the acquired image (i.e., the target position image) can be processed to extract feature points from the image, and then the currently extracted feature points are compared with the feature points of the historical image information to determine whether a position offset has occurred, thereby inferring whether the position of the charging station has changed.

Further, there may be multiple sets of feature point data of the historical image information. For example, multiple sets of data values can be recorded, so that if there is a sudden change in the environment during a single collection and the comparison data amount is insufficient, the extracted feature points of the current captured image can also be stored for use as feature points of the historical image information.

In specific implementation, the captured image can be processed to identify feature points of a fixed reference object type, such as fire facilities, wall corners, and load-bearing pillars, etc., which can specifically be obtained through classification using deep learning. Fixed reference objects are located around the charging station.

In an embodiment of this disclosure, the captured image can be processed to identify feature points of multiple reference objects, which are compared in combination with feature points of historical captured images, credibility of reference objects corresponding to different feature points is analyzed, and a priority sequence for adoption is performed. In an embodiment of this disclosure, the extracted feature points of the current captured image can also be stored for use as feature points of the historical image information. For example, they can be stored before comparison with the feature points of the historical image information.

In an embodiment of this disclosure, the feature points of the historical image information can be data collected by the vision device within a period of time or within a fixed number of times the intelligent mobile device returns for charging.

104. Detecting, based on the matching result, whether the target charging station has been moved.

In an embodiment of this disclosure, whether the target charging station has been moved can be detected based on the matching result. For example, if the matching result is within a preset range, it indicates that the target charging station has been moved; on the contrary, if the matching result is not within the preset range, it indicates that the charging station has not been moved. The preset range can be pre-set or set by the system by default.

105. In response to detecting that the target charging station has been moved, updating a position of the target charging station on a map to obtain a first position.

In an embodiment of this disclosure, in response to detecting that the target charging station has been moved, the user can be prompted to update the position of the target charging station on the map. The user can re-mark the position of the target charging station on the map to obtain the first position. Of course, in response to detecting that the target charging station has been moved, indoor positioning can also be performed through the target charging station to obtain the position of the target charging station, and the position of the target charging station is updated on the map to obtain the first position.

For example, in an embodiment of this disclosure, the intelligent mobile device receives a return instruction, controls the intelligent mobile device to navigate to the charging station based on the return instruction, collects a position image of the charging station, performs feature point comparison between the position image and an internally stored image of the intelligent mobile device to obtain a matching result, determines whether the charging station has been moved using the matching result, and prompts the user and updates the map position on the map if the charging station has been moved.

Alternatively, the following steps can also be included:
A1. detecting whether a target signal of the target charging station is received, the target signal comprising a broadcast signal or a charging signal;
A2. acquiring the target position image of the target charging station in response to receiving the target signal.

Wherein, the broadcast signal can include at least one of the follows: an infrared signal, a Bluetooth signal, an ultraviolet signal, a mobile communication signal (such as 2G, 3G, 4G, 5G, 6G, etc.), an ultra-wideband (UWB) signal, a near field communication (NFC) signal, a millimeter wave signal, a wireless fidelity (WIFI) signal, and so on, which is not limited herein.

In an embodiment of this disclosure, when a distance between the intelligent mobile device and the target charging station is less than a preset distance, a target signal from the target charging station can be received. The target signal can include at least one of: an infrared signal, a charging signal, a pressure spring induction signal, and so on, which is not limited herein.

In specific implementation, whether a target signal of the target charging station is received can be detected. When the target signal is received, it indicates that the distance between the intelligent mobile device and the target charging station is relatively close, or the target charging station is just near the intelligent mobile device, and then the step of collecting the target position image of the target charging station is performed. Therefore, accuracy and efficiency in returning to the station can be guaranteed.

For example, when the intelligent mobile device receives an infrared signal or a charging signal of the charging station, it indicates that the distance between the intelligent mobile device and the target charging station is relatively close, or the target charging station is just near the intelligent mobile device, and collection of the position image of the charging station is started.

Further, optionally, when the target signal comprises the broadcast signal, the step 102 of acquiring the target position image of the target charging station can include the following steps:
A21. obtaining a first current position of the intelligent mobile device;
A22. determining a relative positional relationship between the first current position and the position of the target charging station;
A23. acquiring image information around the target charging station based on the relative positional relationship, and determining the target position image based on the image information.

In an embodiment of this disclosure, when the target signal comprises the broadcast signal, it indicates that the intelligent mobile device has entered a broadcast signal range of the target charging station. The first current position of the intelligent mobile device can be obtained, and the relative positional relationship between the first current position and the position of the target charging station can also be determined. The relative positional relationship can include at least one of: a distance relationship, an angular relationship, or the like, which is not limited herein. Subsequently, image information around the target charging station can be acquired based on the relative positional relationship, and the target position image can be determined based on the image information. Specifically, corresponding imaging parameters can be determined based on different relative positional relationships. Specifically, corresponding imaging parameters can be determined based on the distance and angle, or corresponding imaging parameters can also be determined based on the distance, angle, light, and so on. imaging parameters can include at least one of: sensitivity (ISO), exposure time, a capture mode, a focal length, and so on, which is not limited herein. The capture modes can include at least one of the following: panorama mode, portrait mode, night scene mode, video mode, and so on, which is not limited herein.

Further, the image information around the target charging station is acquired according to the imaging parameters. Since the broadcast signal is received and the intelligent mobile device has entered the broadcast signal range of the target charging station, the vision device can be controlled to face the target charging station for capturing, or the angle between the vision device and the target charging station can also be controlled to be within a preset angle range for capturing. The preset angle range can be pre-set or set by the system by default. Thereby, relevant image information of the target charging station can be obtained, and the relevant image information can be used to identify whether the target charging station has been moved.

For example, taking an infrared signal as an example, when the intelligent mobile device receives an infrared signal of the charging station and determines the relative positional relationship (e.g., distance and angle) between the current position of the intelligent mobile device and the charging station, image information around the charging station can be acquired. For example, a background image where the charging station is placed is directly acquired, or, for example, the image is acquired after rotating 90 degrees, etc., thereby facilitating finding more reliable reference features.

Further, optionally, when the target signal comprises the charging signal, the step 102 of acquiring the target position image of the target charging station can include the following steps: controlling the vision device to acquire a first current image, and determining the target position image based on the first current image.

In an embodiment of this disclosure, when the target signal comprises the charging signal, the vision device can be controlled to acquire the first current image, and the target position image is determined based on the first current image, which facilitates accurate image collection to precisely judge the position change of the charging station. Alternatively, the intelligent mobile device can also be controlled to move to a designated position of the target charging station, wherein the designated position can be pre-set or set by the system by default. For example, the designated position can be a certain position in a front area of the target charging station. At the designated position, the vision device is controlled to acquire a second current image, and the target position image is determined based on the second current image, thereby enabling more precise image collection at the designated position to precisely judge the position change of the charging station.

In practical applications, when the target signal comprises the charging signal, it indicates that the distance between the intelligent mobile device and the target charging station is less than a preset distance, that is, at this time, the intelligent mobile device is in close proximity to the target charging station. For example, the intelligent mobile device is close to or directly in contact with the target charging station. The preset distance can be pre-set or set by default in the system. When the intelligent mobile device is close to but not in contact with the target charging station, the target charging station can perform wireless charging for the intelligent mobile device. When the intelligent mobile device is in contact with the target charging station, the target charging station can charge the intelligent mobile device through wireless charging or wired charging. In some embodiments, when the target signal comprises the charging signal, because the distance between the intelligent mobile device and the target charging station is relatively close, it is difficult to capture a front of the target charging station. Therefore, the camera angle of the vision device can also be adjusted to capture with the back facing the target charging station, thereby obtaining more features of the background image near the target charging station.

For example, when the intelligent mobile device receives a charging signal, it controls the vision device to acquire a current image. Alternatively, further, when the intelligent mobile device receives the charging signal, the intelligent mobile device moves to a position directly in front of the charging station and controls the vision device to capture a current image in a direction facing away from the charging station, and determines the target position image based on the current image.

Optionally, the method may further comprise the following steps:
B1. When detecting that the intelligent mobile device is in a strong RTK signal area, controlling the intelligent mobile device to move along a navigation path;
B2. When detecting that the intelligent mobile device enters a weak RTK signal area, performing navigation based on RTK positioning information, and/or image information acquired by the vision device, or both.

In an embodiment of this disclosure, an area where the RTK signal is greater than a preset signal strength threshold can be defined as a strong RTK signal area. Conversely, an area where the RTK signal is less than or equal to the preset signal strength threshold can be defined as a weak RTK signal area. The preset signal strength threshold can be pre-set or set by the system by default.

In specific implementation, when the intelligent mobile device is in a strong RTK signal area, it is controlled to move on the navigation path, which can ensure that the intelligent mobile device navigates to the position of the target charging station according to a established navigation route, thereby improving accuracy and efficiency in returning to the station. When the intelligent mobile device enters a weak RTK signal area, it performs navigation based on the RTK positioning information and/or the image information acquired by the vision device, which can use the vision device to assist navigation and ensure that the intelligent mobile device navigates to the position of the target charging station according to the established navigation route, helping to ensure accuracy and efficiency in returning to the station.

Further, during continued navigation, if feature points of the charging station position are extracted from the image acquired by the vision device, the feature points can be the charging station itself or a QR code attached to the charging station, or can also be a characteristic object in a fixed positional relationship with the charging station. Then the intelligent mobile device can be controlled to update the continuous navigation path, and the intelligent mobile device follows the continuous path until it receives an infrared signal or a charging signal of the charging station.

For example, in an area with good RTK signals, the intelligent mobile device can move along the navigation path based on RTK positioning. When entering an area with weak RTK signals, the intelligent mobile device may perform extended exploration based on the RTK positioning information and continue navigation with reference to the image information acquired by the vision device, or navigation can also be shifted to use the image information acquired by the vision device.

Alternatively, after prompting the user to update the position of the target charging station on the map and obtaining the first position, the following steps can also be included:

Reducing credibility of features of the historical position image, or deleting image feature information of the historical position image.

Wherein, image feature information can include at least one of the following: the image itself, feature points of the image, feature values of the image, feature textures of the image, feature vectors of the image, and so on, which is not limited herein.

In some embodiments of this disclosure, since the position of the target charging station has changed, the credibility of the historical position image is reduced. Furthermore, taking feature points as an example, credibility of the feature points of the historical position image can be reduced, or the image feature information of the historical position image can be deleted, i.e., the target position image can be saved and used as a new historical position image, thereby ensuring accuracy and efficiency in returning to the station.

For example, in specific implementation, if the charging station is moved, credibility of the feature points of the historical image information can be reduced, or the image feature information of the historical record can be directly deleted, thereby reducing memory overhead and improving detection efficiency for whether the charging station has been moved.

Optionally, after updating the position of the target charging station on the map to obtain the first position, the following steps can also be included:
C1. obtaining a second current position of the intelligent mobile device;
C2. generating a navigation route between the second current position and the first position;
C3. controlling the intelligent mobile device to navigate to the target charging station based on the navigation route.

In some embodiments of this disclosure, obtaining the second current position of the intelligent mobile device, a navigation route between the second current position and the first position can be generated, and the intelligent mobile device is controlled to navigate to the target charging station based on the navigation route. Furthermore, after the target charging station is moved, the navigation route is updated in time, ensuring that the intelligent mobile device successfully returns to the station, which helps to ensure accurate and efficient return to the station.

The control method for an intelligent mobile device based on a charging station described in this disclosure, applied to the intelligent mobile device, receiving a return instruction, the return instruction being configured to control the intelligent mobile device to navigate to a target charging station; in response to the return instruction, acquiring a target position image of the target charging station during a process of the intelligent mobile device navigating to the target charging station; performing feature matching between the target position image and a pre-stored historical position image of the target charging station to obtain a matching result; detecting, based on the matching result, whether the target charging station has been moved; and in response to detecting that the target charging station has been moved, updating a position of the target charging station on a map to obtain a first position. Thereby, efficient return of the intelligent mobile device for charging in an environment with weak RTK signals and recognition of whether the position of the charging station has changed can be realized, improving efficiency of the next return for charging. Moreover, during the current process of returning to the station, if the charging station is moved, the position of the charging station is updated in time, also ensuring accurate return to the station this time. Furthermore, the problem of ensuring accurate and efficient return to the station indoors or in places with poor RTK signals can be solved by detecting movement of the charging station.

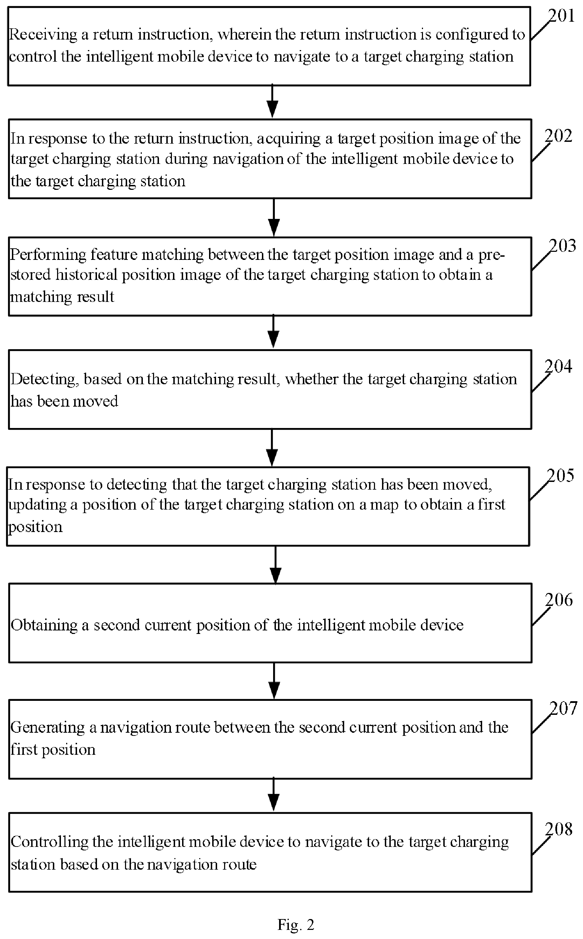

Please refer to FIG. 2. FIG. 2 is a schematic flowchart of a method for controlling an intelligent mobile device based on a charging station according to an embodiment of the present disclosure. As shown in FIG. 2, the method comprises:
201: Receiving a return instruction, wherein the return instruction is configured to control the intelligent mobile device to navigate to a target charging station;
202: In response to the return instruction, acquiring a target position image of the target charging station during navigation of the intelligent mobile device to the target charging station;
203: Performing feature matching between the target position image and a pre-stored historical position image of the target charging station to obtain a matching result;
204: Detecting, based on the matching result, whether the target charging station has been moved;
205: In response to detecting that the target charging station has been moved, updating a position of the target charging station on a map to obtain a first position;
206: Obtaining a second current position of the intelligent mobile device;
207: Generating a navigation route between the second current position and the first position;
208: Controlling the intelligent mobile device to navigate to the target charging station based on the navigation route.

The detailed descriptions of steps 201 to 208 may refer to the corresponding steps of the method shown in FIG. 1, and are not repeated herein.

The method for controlling an intelligent mobile device based on a charging station described in the present disclosure is applied to the intelligent mobile device. The method includes receiving a return instruction, wherein the return instruction being configured to control the intelligent mobile device to navigate to the target charging station. In response to the return instruction, during navigation of the intelligent mobile device to the target charging station, a target position image of the target charging station is acquired. The target position image is subjected to feature matching with a pre-stored historical position image of the target charging station to obtain a matching result. Based on the matching result, it is determined whether the target charging station has been moved. When the target charging station is detected to have been moved, the position of the target charging station is updated on a map to obtain a first position. A second current position of the intelligent mobile device is then obtained, and a navigation route between the second current position and the first position is generated. The intelligent mobile device is controlled to navigate to the target charging station based on the navigation route.

Accordingly, efficient return to the charging station in environments with weak RTK signals can be achieved, and whether the position of the charging station has changed can be identified, thereby improving efficiency of subsequent return operations. Moreover, during the current return process, if the charging station is moved, the position of the charging station can be updated in a timely manner. That is, after the position of the charging station changes, the navigation route is promptly updated. Therefore, even in indoor environments or areas with poor RTK signals, accurate and efficient return to the charging station can be ensured by detecting movement of the charging station.

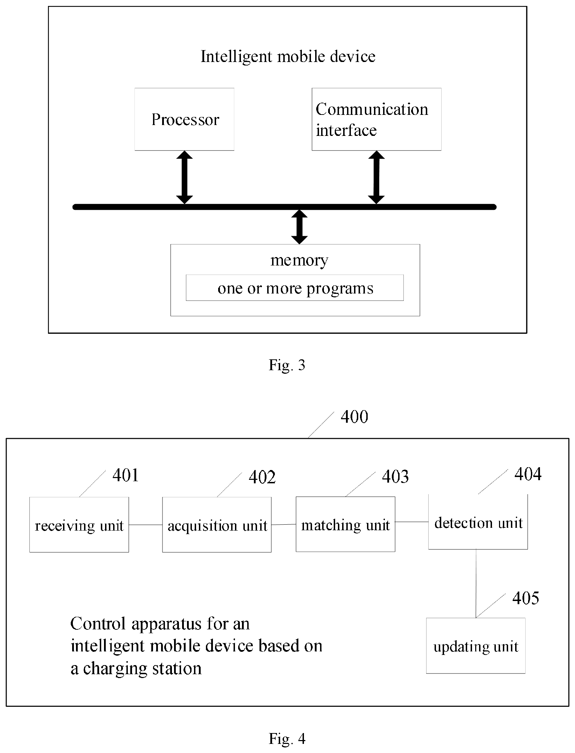

Consistent with the above embodiments, please refer to FIG. 3. FIG. 3 is a schematic structural diagram of an intelligent mobile device according to an embodiment of the present application. As shown in FIG. 3, the intelligent mobile device comprises a processor, a memory, a communication interface, and one or more programs. The one or more programs are stored in the memory and configured to be executed by the processor. In the embodiments of the present application, the one or more programs comprise instructions for performing the following steps:
Receiving a return instruction, wherein the return instruction is configured to control the intelligent mobile device to navigate to a target charging station;
In response to the return instruction, acquiring a target position image of the target charging station during navigation of the intelligent mobile device to the target charging station;
Performing feature matching between the target position image and a pre-stored historical position image of the target charging station to obtain a matching result;
Detecting, based on the matching result, whether the target charging station has been moved;
In response to detecting that the target charging station has been moved, updating a position of the target charging station on a map to obtain a first position.

Optionally, the one or more programs further comprise instructions for performing the following steps:
detecting whether a target signal from the target charging station is received, wherein the target signal comprises a broadcast signal or a charging signal; and
in response to receiving the target signal, performing the step of acquiring the target position image of the target charging station.

Further optionally, when the target signal comprises the broadcast signal, with respect to acquiring the target position image of the target charging station, the one or more programs comprise instructions for performing the following steps:
obtaining a first current position of the intelligent mobile device;
determining a relative positional relationship between the first current position and a position of the target charging station; and
acquiring image information around the target charging station based on the relative positional relationship, and determining the target position image based on the image information.

Further, alternatively, when the target signal comprises the charging signal, in terms of collecting the target position image of the target charging station, the program comprises instructions configured to perform the following step: controlling the vision device to collect a first current image, and determining the target position image based on the first current image.

alternatively, the program further comprises instructions configured to perform the following steps: when detecting that the intelligent mobile device is in a strong RTK signal area, controlling the intelligent mobile device to move on a navigation path; and when detecting that the intelligent mobile device enters a weak RTK signal area, performing navigation based on RTK positioning information, or image information collected by the vision device, or both.

Alternatively, after updating the position of the target charging station on the map to obtain the first position, the program further comprises instructions configured to perform the following step: reducing credibility of features of the historical position image, or deleting image feature information of the historical position image.

Alternatively, after updating the position of the target charging station on the map to obtain the first position, the program further comprises instructions configured to perform the following steps: obtaining a second current position of the intelligent mobile device; generating a navigation route between the second current position and the first position; and controlling the intelligent mobile device to navigate to the target charging station based on the navigation route.

The intelligent mobile device described in this disclosure receives a return instruction, the return instruction being configured to control the intelligent mobile device to navigate to a target charging station; in response to the return instruction, and during a process of the intelligent mobile device navigating to the target charging station, collects a target position image of the target charging station; performs feature matching between the target position image and a pre-stored historical position image of the target charging station to obtain a matching result; detects, based on the matching result, whether the target charging station has been moved; and based on detecting that the target charging station has been moved, updates the position of the target charging station on the map to obtain a first position. Thereby, efficient return of the intelligent mobile device for charging in an environment with weak RTK signals and recognition of whether the position of the charging station has changed can be realized, improving efficiency of the next return for charging. Moreover, during the current process of returning to the station, if the charging station is moved, the position of the charging station is updated in time, also ensuring accurate return to the station this time. Furthermore, the problem of ensuring accurate and efficient return to the station indoors or in places with poor RTK signals can be solved by detecting movement of the charging station.

FIG. 4 is a functional unit block diagram of a control apparatus 400 for an intelligent mobile device based on a charging station according to an embodiment of this disclosure. The control apparatus 400 for an intelligent mobile device based on a charging station is applied to the intelligent mobile device. The apparatus 400 comprises: a receiving unit 401, a acquisition unit 402, a matching unit 403, a detection unit 404, and an updating unit 405, wherein:
The receiving unit 401 is configured to receive a return instruction, the return instruction being configured to control the intelligent mobile device to navigate to the target charging station;
The acquisition unit 402 is configured to, in response to the return instruction, and during a process of the intelligent mobile device navigating to the target charging station, acquire a target position image of the target charging station;
The matching unit 403 is configured to perform feature matching between the target position image and a pre-stored historical position image of the target charging station to obtain a matching result;
The detection unit 404 is configured to detect, based on the matching result, whether the target charging station has been moved;
The updating unit 405 is configured to, based on detecting that the target charging station has been moved, update a position of the target charging station on a map to obtain a first position.

Alternatively, the apparatus 400 is further specifically configured to: detect whether a target signal of the target charging station is received, the target signal comprising a broadcast signal or a charging signal; and when the target signal is received, perform the step of collecting the target position image of the target charging station.

Alternatively, when the target signal comprises the broadcast signal, in terms of acquiring the target position image of the target charging station, the acquisition unit 402 is specifically configured to: obtain a first current position of the intelligent mobile device; determine a relative positional relationship between the first current position and the position of the target charging station; and collect image information around the target charging station based on the relative positional relationship, and determine the target position image based on the image information.

Alternatively, when the target signal comprises the charging signal, in terms of collecting the target position image of the target charging station, the acquisition unit 402 is specifically configured to: control the vision device to collect a first current image, and determine the target position image based on the first current image; or control the intelligent mobile device to move to a designated position of the target charging station, control the vision device to collect a second current image at the designated position, and determine the target position image based on the second current image.

Alternatively, the apparatus 400 is further specifically configured to: when detecting that the intelligent mobile device is in a strong RTK signal area, control the intelligent mobile device to move on a navigation path; and when detecting that the intelligent mobile device enters a weak RTK signal area, perform navigation based on RTK positioning information, or image information collected by the vision device, or both.

Alternatively, after updating the position of the target charging station on the map to obtain the first position, the apparatus 400 is further specifically configured to: reducing credibility of features of the historical position image, or deleting image feature information of the historical position image.

Alternatively, after updating the position of the target charging station on the map to obtain the first position, the apparatus 400 is further specifically configured to: obtain a second current position of the intelligent mobile device; generate a navigation route between the second current position and the first position; and control the intelligent mobile device to navigate to the target charging station based on the navigation route.

The intelligent mobile device apparatus described in this disclosure, applied to the intelligent mobile device, receives a return instruction, the return instruction being configured to control the intelligent mobile device to navigate to a target charging station; in response to the return instruction, and during a process of the intelligent mobile device navigating to the target charging station, collects a target position image of the target charging station; performs feature matching between the target position image and a pre-stored historical position image of the target charging station to obtain a matching result; detects, based on the matching result, whether the target charging station has been moved; and based on detecting that the target charging station has been moved, updates the position of the target charging station on the map to obtain a first position. Thereby, efficient return of the intelligent mobile device for charging in an environment with weak RTK signals and recognition of whether the position of the charging station has changed can be realized, improving efficiency of the next return for charging. Moreover, during the current process of returning to the station, if the charging station is moved, the position of the charging station is updated in time, also ensuring accurate return to the station this time. Furthermore, the problem of ensuring accurate and efficient return to the station indoors or in places with poor RTK signals can be solved by detecting movement of the charging station.

It can be understood that functions of various program modules of the control apparatus for an intelligent mobile device based on a charging station in this embodiment can be specifically implemented according to the methods in the above method embodiments. For the specific implementation process, reference can be made to the relevant description of the above method embodiments, and details are not repeated here.

Embodiments of this disclosure also provide a computer storage medium, wherein the computer storage medium stores a computer program for electronic data exchange, the computer program causing a computer to perform some or all steps in any method recorded in the above method embodiments. The computer includes an electronic device.

Embodiments of this disclosure also provide a computer program product, the computer program product comprising a non-transitory computer-readable storage medium storing a computer program, the computer program being operable to cause a computer to perform some or all steps in any method recorded in the above method embodiments. The computer program product can be a software installation package. The computer includes an electronic device.

Embodiments of this disclosure also provide a 3D cloud map expansion system, the 3D cloud map expansion system comprising an electronic device and a server, and the 3D cloud map expansion system being configured to perform any of the above methods.

It should be noted that, for the aforementioned method embodiments, for simplicity of description, they are all expressed as a series of action combinations. However, those skilled in the art should know that this disclosure is not limited by the described sequence of actions, because some steps can be performed in other sequences or simultaneously according to this disclosure. Secondly, those skilled in the art should also know that the embodiments described in the specification are preferred embodiments, and the involved actions and modules are not necessarily required by this disclosure.

In the above embodiments, descriptions of various embodiments have different emphases. For parts that are not detailed in a certain embodiment, reference can be made to relevant descriptions of other embodiments.

In several embodiments provided in this disclosure, it should be understood that the disclosed system can be implemented in other ways. For example, the system embodiments described above are only schematic. For example, the division of units is only a logical function division, and there may be other division ways in actual implementation. For example, multiple units or components can be combined or integrated into another system, or some features can be ignored or not performed. Another point is that the displayed or discussed mutual coupling or direct coupling or communication connection can be indirect coupling or communication connection through some interfaces, systems, or units, which can be electrical or in other forms.

Units described as separate components may or may not be physically separated. Components displayed as units may or may not be physical units, that is, they can be located in one place or distributed over multiple network units. Some or all of the units can be selected according to actual needs to achieve the purpose of the solutions of the embodiments.

In addition, various functional units in the embodiments of this disclosure can be integrated into one processing unit, or each unit can exist physically independently, or two or more units can be integrated into one unit. The above integrated units can be implemented in the form of hardware or in the form of software functional units.

If the integrated units are implemented in the form of software functional units and sold or used as independent products, they can be stored in a computer-readable memory. Based on such an understanding, the technical solutions of this disclosure essentially, or the part contributing to the existing art, or all or part of the technical solutions can be embodied in the form of a software product. The computer software product is stored in a memory, comprising several instructions to cause a computer device (which can be a personal computer, a server, or a network device, etc.) to perform all or part of the steps of the methods of the various embodiments of this disclosure. The aforementioned memory includes: a U-disk, a read-only memory (ROM), a random access memory (RAM), a mobile hard disk, a magnetic disk, or an optical disk, and various other media that can store program codes.

Those of ordinary skill in the art can understand that all or part of the steps in the various methods of the above embodiments can be completed by instructing relevant hardware through a program. The program can be stored in a computer-readable memory, and the memory can include: a flash disk, a read-only memory (ROM), a random access memory (RAM), a magnetic disk, or an optical disk.

The embodiments of this disclosure have been introduced in detail above. Specific examples are used in this disclosure to illustrate principles and implementation modes of this disclosure. The descriptions of the above embodiments are only used to help understand the methods and core ideas of this disclosure. Meanwhile, for those of ordinary skill in the art, according to the ideas of this disclosure, there will be changes in the specific implementation modes and application scope. In conclusion, the content of this specification should not be understood as a limitation on this disclosure.

## Claims

1. A control method for an intelligent mobile device based on a charging station, applied to the intelligent mobile device, the method comprising:
receiving a return instruction, the return instruction being configured to control the intelligent mobile device to navigate to a target charging station;
in response to the return instruction, acquiring a target position image of the target charging station during a process of the intelligent mobile device navigating to the target charging station;
performing feature matching between the target position image and a pre-stored historical position image of the target charging station to obtain a matching result;
detecting, based on the matching result, whether the target charging station has been moved; and
in response to detecting that the target charging station has been moved, updating a position of the target charging station on a map to obtain a first position.

2. The control method according to claim 1, further comprising:
detecting whether a target signal of the target charging station is received, the target signal comprising a broadcast signal or a charging signal; and
acquiring the target position image of the target charging station in response to receiving the target signal.

3. The control method according to claim 2, wherein acquiring the target position image of the target charging station in response to receiving the target signal comprises:
obtaining a first current position of the intelligent mobile device;
determining a relative positional relationship between the first current position and the position of the target charging station;
acquiring image information around the target charging station according to the relative positional relationships, and determining the target position image based on the image information.

4. The control method according to claim 2, wherein acquiring the target position image of the target charging station in response to receiving the target signal comprises:
controlling a vision device to acquire a first current image, and determining the target position image based on the first current image.

5. The control method according to claim 4, further comprising:
controlling the intelligent mobile device to move along a navigation path when it is detected that the intelligent mobile device is in a strong RTK signal area; and
performing navigation based on RTK positioning information and/or image information acquired by the vision device when it is detected that the intelligent mobile device enters a weak RTK signal area.

6. The control method according to any one of claims 1 to 5, wherein after the updating the position of the target charging station on the map to obtain the first position, the method further comprises:
reducing credibility of features of the historical position image, or deleting image feature information of the historical position image.

7. The control method according to any one of claims 1 to 5, wherein after the updating the position of the target charging station on the map to obtain the first position, the control method further comprises:
obtaining a second current position of the intelligent mobile device;
generating a navigation route between the second current position and the first position; and
controlling the intelligent mobile device to navigate to the target charging station according to the navigation route.

8. The control method according to claim 3, wherein the relative positional relationships comprises at least one of: a distance relationship or an angular relationship, and the control method further comprises:
determining corresponding image parameters based on different relative positional relationships; and
acquiring the image information around the target charging station based on the image parameters, and
using the image information as the target position image.

9. A control method for an intelligent mobile device based on a charging station, applied to the intelligent mobile device, the control method comprising:
in response to a return instruction, acquiring a target position image of the target charging station during a process of the intelligent mobile device navigating to the target charging station,
performing feature matching between the target position image and a pre-stored historical position image of the target charging station to obtain a matching result; and
detecting, based on the matching result, whether the target charging station has been moved.

10. The method according to any one of claims 1 to 9, further comprising:
processing the target position image to identify feature points of a fixed reference object type; and
performing matching between the feature points corresponding to the fixed reference object type and
feature points of the historical position image to obtain a credibility of reference objects corresponding to different feature points.

11. The method according to claim 10, further comprising: storing the feature points corresponding to the fixed reference object type.

12. A control apparatus for an intelligent mobile device based on a charging station, applied to the intelligent mobile device, the apparatus comprising: a receiving unit, an acquisition unit, a matching unit, a detection unit, and an updating unit, wherein:
the receiving unit is configured to receive a return instruction, the return instruction being configured to control the intelligent mobile device to navigate to a target charging station;
the acquisition unit is configured to, in response to the return instruction and during a process of the intelligent mobile device navigating to the target charging station, acquire a target position image of the target charging station;
the matching unit is configured to perform feature matching between the target position image and a pre-stored historical position image of the target charging station to obtain a matching result;
the detection unit is configured to detect, based on the matching result, whether the target charging station has been moved; and
the updating unit is configured to update a position of the target charging station on a map to obtain a first position in response to detecting that the target charging station has been moved,.

13. An intelligent mobile device, comprising a processor and a memory, the memory being configured to store one or more programs, and the memory being configured to be executed by the processor, the one or more programs comprising instructions configured to perform steps of the method of any one of claims 1 to 11.

14. A computer-readable storage medium storing a computer program for electronic data exchange, wherein the computer program causes a computer to perform the method of any one of claims 1 to 11.
